# EUROPEAN PATENT APPLICATION

(11) **EP 4 015 574 A1**
(43) Date of publication of application: **22.06.2022**
(21) Application number: 21210853.4
(22) Date of filing: 26.11.2021
(51) Int. Cl.: C08J 11/16, C08L 67/04

(54) **SYSTEM FOR RECYCLING POLYLACTIC ACID IN WASTE STREAMS TO OBTAIN LACTIDE**

(30) Priority: 15.12.2020 BE 202005922
(71) Applicant: Despriet Gebroeders NV, 8500 Kortrijk (BE)
(72) Inventor: Barakat, Ibrahim, 8500 Kortrijk (BE); Dejonghe, Steve, 8500 Kortrijk (BE)
(74) Representative: Brantsandpatents bvba

(57) **Abstract**

The current invention concerns a system (1) to produce a pure lactide monomer stream from a polylactic acid based waste stream by recycling the latter to produce the former. The system (1) comprises an assembly (2) of synchronized extruders and a recovery unit (3). The assembly (2) comprises at least one extruder, and the unit (3) comprises an assembly of vapor collectors (17) and a plurality of traps (23). Lactide crystals are formed in said traps (23). The at least one extruder is a virtually infinite extruder. The system (1) is adapted for a continuous process by adapting the recovery traps (23) such that the lactide crystals are formed in some traps (23), while the lactide crystals are collected in some other traps (23), and continuously alternating functionally between said traps (23).

## Description

### TECHNICAL FIELD

The invention pertains to the technical field of systems to obtain a pure lactide stream from polylactic acid, in particular to obtain a pure lactide stream from polylactic acid in waste streams.

### BACKGROUND

Polylactic acid (PLA) is a linear, aliphatic thermoplastic polyester that is typically produced by ring opening polymerization of lactide, a cyclic di-ester of lactic acid. Lactic acid can be obtained through fermentation of renewable resources such as, for example, (corn) starch, tapioca roots, or sugarcane. This makes PLA a bio-based polymer as opposed to the now commonly used petroleum-based polymers, such as polystyrene, polyethylene, polypropylene, polyethylene terephthalate, etc. Besides the fact that it can be obtained from renewable resources, PLA also has the advantage that it can be biodegraded on a landfill, thus allowing it to be more readily disposed of after use. These two advantageous properties have led to a significant increase in the use of PLA for various applications, ranging from food packaging to biomedical products, textiles, cards, electronic appliances and others.

However, in order to make PLA suitable for various different applications, usually different types of additives are added to improve the properties of PLA. For durable, higher demanding applications, for example, the mechanical or thermal properties of PLA must systematically be enhanced to reach the expected performances. This is generally achieved by blending PLA with additives, such as for example mineral charges, impact modifiers, plasticizers and/or other polymers (bio-based or not), which negatively affects the biodegradability properties of PLA.

Moreover, from an economic and ecological viewpoint, it would be better if the PLA waste, after use, could be degraded into a product that still has some use, instead of PLA being degraded on a landfill whereby most material properties of PLA are lost. This can, for example, be achieved by depolymerizing the used polylactic acid product back into its essential building blocks, i.e. lactic acid or lactide, said building blocks can then be reused to, for example, produce new PLA or can be reused for other purposes. Seeing PLA is produced directly from lactide and not lactic acid, it would be much more practical to produce lactide from PLA instead of lactic acid, because the lactic acid still has to be converted back into lactide in order to produce new PLA. Furthermore, lactide, besides for use in the production of PLA, is also applicable in many other industries, such as the food or chemical industry.

There are a few prior art documents related to the depolymerization of polylactic acid to lactide, such as for example displayed in EP 0 264 926, EP 1 741 707 or EP 2 222 658. However, none of these prior art documents seem to address the various additives that are present in the PLA based waste streams, said additives have a large effect on the yield, purity and properties of the final lactide end-product. Indeed, the presence of impurities in the polylactic acid based waste stream will have a significant effect on the purification process of the raw lactide stream, obtained after the depolymerization of the polylactic acid based waste stream, as this raw lactide stream will comprise a broad variety of contaminants, derived from the impurities of the polylactic acid based waste stream.

Another important issue is the stereoisomeric form of the lactide. As lactic acid exists in two forms which are optical enantiomers, designated as D-lactic acid and L-lactic acid, lactide may have one of three types of optical activity depending on whether it consists of two L-lactic acid molecules, two D-lactic acid molecules or an L-lactic acid molecule and a D-lactic acid molecule combined to form the dimer. These three dimers are designated L-lactide, D-lactide and meso-lactide, respectively. A 50/50 mixture of L-lactide and D-lactide is often referred to as D, L-lactide. All these different forms also have differing stabilities and properties. Depending on the application of the lactide, it is therefore desirably to control the purification process and make it adaptable depending on the desired composition of lactide one wants to obtain.

Other chemical depolymerization processes of PLA were shown in WO 2011/029648, WO 2010/118954, and WO 2010/118955. Such processes allow the recovery of lactic acid which after purification, allows the synthesis of the PLA. These processes use hydrolysis or transesterification with alcohol for the degradation of PLA. The solution of the PLA in a lactic acid ester before the depolymerization stage allows the PLA to be depolymerized under mild conditions (low temperature). Though the degradation of PLA is effective, the reaction time is too long (approximately 24 hours, depending on the process). In addition, the final product of said processes is lactic acid and not lactide, which still has to be converted back into lactide in order to produce new PLA. Finally, such processes are batch processes, and not continuous processes.

There remains a need in the art for an improved and broadly applicable system and method to produce lactide with high purity from polylactic acid based waste streams which are obtained from various resources and which contain various amounts and types of impurities, whereby the stereochemistry of the lactide end-product can be tuned to a desired composition in a continuous process.

The present invention aims to resolve at least some of the problems mentioned above.

### SUMMARY OF THE INVENTION

The present invention provides a system to produce a pure lactide stream from polylactic acid in polylactic acid based waste stream, by recycling the waste to produce the lactide.

The system according to the present invention produces lactide in high purity and with a desired stereochemistry from polylactic acid in a polylactic acid based waste stream which may comprise a wide variety of impurities in various amounts. It is an advantage of embodiments of the present invention that high purity lactide is achieved together with high depolymerization rates and low reaction time, such as for example between 5 min and 20 min, by a number of components in the system.

The system according to the present invention comprises two main parts: an assembly of synchronized extruders and a recovery unit. The assembly of synchronized extruders comprises at least one extruder, wherein the at least one extruder is a virtually infinite extruder. The recovery unit comprises an assembly of vapor collectors and a plurality of traps.

The assembly of synchronized extruders may further comprise a pre-conditioning extruder unit, preceding the at least one extruder. It is an advantage of embodiments of the present invention that the pre-conditioning extruder unit provides an optimal preparation of the waste material and therefore a higher lactide conversion rate. The pre-conditioning extruder unit may be used as a buffer zone e.g. to avoid overloading the system.

The polylactic acid waste may be injected into the pre-conditioning extruder unit. It is an advantage of embodiments of the present invention that different kinds of extruders may be used in the pre-conditioning unit.

The pre-conditioning unit is adapted to vacuum extract moisture and volatile organic compounds. It is an advantage of embodiments of the present invention that residual moisture and volatile organic compounds may be vacuum extracted after melting the polylactic acid waste at or above the melting temperature of polylactic acid. It is further an advantage of embodiments of the present invention that vacuum extraction prevents the effect of the moisture and the compounds on the efficiency of a subsequent catalytic extrusion and its catalyst.

The system may further comprise a preliminary unit, preceding the assembly of synchronized extruders. The preliminary unit may comprise a grinding unit, a washing unit, and a drying unit. It is an advantage of embodiments of the present invention that a preliminary unit prepares the polylactic acid waste for recycling. It is an advantage of embodiments of the present invention that the grinding unit increases the melt kinetics while melting the waste in the pre-conditioning extruder unit. It is an advantage of embodiments of the present invention that washing with e.g. water in the washing unit reduces residence times, and saves energy and consumables. It is an advantage of embodiments of the present invention that the drying unit removes most of the water that may have a negative impact on the recycling yield.

The at least one extruder according to the present invention may be arranged in a loop circuit, so as to obtain a virtually infinite extruder, wherein the waste is circulated. It is an advantage of embodiments of the present invention that a virtually infinite extruder virtually increases length/diameter (L/D) ratio so as to achieve high process efficiency and high depolymerization rates. It is an advantage of embodiments of the present invention that the loop circuit allows a simplified and compact recovery system of the lactide compared to standard extrusion line.

It is an advantage of embodiments of the present invention that the L/D ratio is virtually increased by a factor (n), wherein n is the number of loops. It is an advantage of embodiments of the present invention that the L/D ratio and/or the factor (n) are adapted depending on the material properties of the waste.

The virtually infinite extruder may be made of two twin-screw extruders connected to one another so as to form a loop circuit, and wherein at least one extruder of the two twin-screw extruders is fitted with a catalyst injection pump to inject a catalyst. It is an advantage of embodiments of the present invention that kneading blocks and mixing elements are present to ensure a proper distribution of the catalyst. Regular conveying elements may further be fitted on at the least one extruder in the twin-screw extruders at various vacuum points. It is an advantage of embodiments of the present invention that conveying elements allow low melt pressure and enhance lactide vapor extraction. It is an advantage of embodiments of the present invention that a catalyst may induce de-polymerization and cyclization of lactic acid to lactide dimers.

At least one of the two twin-screw extruders according to the present invention may comprise a three-way valve. It is an advantage of embodiments of the present invention that a three-way valve ensures the mechanical discharge of post-recycling residue e.g. per gravity. It is an advantage of embodiments of the present invention that the three-way valve is adapted to either loop the waste (e.g. process in progress or incomplete) or to discharge post-recycling residue (e.g. process complete).

It is an advantage of embodiments of the present invention that when the three-way valve opens for discharging post-recycling residues, the feed control valve opens simultaneously together with the injection pump of the catalyst, to stop the process.

It is an advantage of embodiments of the present invention that in the two twin-screw extruders, with the presence of the catalyst, and with the high temperatures, and high vacuum, lactide vapor is obtained from the polylactic acid waste.

The assembly of vapor collectors according to the present invention may be installed on the two twin-screw extruders through various vacuum points, at least one vacuum point. It is an advantage of embodiments of the present invention that the assembly of vapor collectors extracts the lactide vapor from the two twin-screw extruders. The assembly of vapor collectors comprises at least one vapor collector.

The recovery unit comprises a plurality of traps. It is an advantage of embodiments of the present invention that the lactide vapor is carried through the assembly of vapor collectors with optimal efficiency to the plurality of traps wherein said vapor solidifies into lactide crystals.

The plurality of traps may be a plurality of cylinders, and each trap may be equipped with double walls. It is an advantage of embodiments of the present invention that a cooling liquid circulates inside the double walls to cool the inner walls of the traps wherein the lactide vapor is condensed or solidify to form lactide crystals.

A high vacuum is applied at all times on the two twin-screw extruders. It is an advantage of embodiments of the present invention that a continuous process is obtained.

The plurality of traps are adapted such that the lactide crystals are formed e.g. condensed or crystallized in some traps, while the lactide crystals are scrapped or collected in some other traps, and continuously alternating between the function of each trap. It is an advantage of embodiments of the present invention that a continuous process may be achieved.

The traps may comprise a plurality of propeller blades and a plurality of scraper blades. It is an advantage of embodiments of the present invention that the plurality of propeller blades are actuated to create a turbulent flow and centrifugal forces to maximize contacts between the lactide vapor and the inner walls of the trap. It is an advantage of embodiments of the present invention that the lactide crystals are periodically removed from the traps by the plurality of scraper blades.

The plurality of traps may be vertical, wherein the lactide vapor may be injected at the top of said traps. It is an advantage of embodiments of the present invention that a hermetic bag may be placed below the vertical traps for the scrapped lactide crystals to fall into.

The system communicates with weight scales, on which the lactide crystals are being recovered. It is an advantage of embodiments of the present invention that through a mass balance calculation e.g. input polylactic acid quantities versus recovered lactide crystals.

Some or all of the feed control valve, the extruders, the catalyst injection pump, the three-way valve, and the traps, may be controlled and/or synchronized by a programmable logic controller (PLC). It is an advantage of embodiments of the present invention that the PLC ensures a constant loading of the extruders. It is an advantage of embodiments of the present invention that a continuous process is obtained. It is an advantage of embodiments of the present invention that the PLC adapts and synchronizes the flow speed of the extruders in the assembly of synchronized extruders e.g. pre-conditioning extruder unit and twin-screw extruder to harmonize the waste throughout the system. It is an advantage of embodiments of the present invention that the number of loops for which the waste should be circulated in the virtually infinite extruder is controlled by the PLC. It is an advantage of embodiments of the present invention that the number of loops is controlled by the PLC by a periodic control of mass balance or continuous in-melt measurements.

The system may further comprise an analysis unit, wherein the collected lactide crystals are analyzed.

The traps may comprise a port for temperature sensor and/or a port for pressure sensor. It is an advantage of embodiments of the present invention that the temperature and pressure in the trap may be monitored.

Further advantages of the invention and in particular of preferred embodiments, are disclosed in the detailed description below.

### DESCRIPTION OF THE FlGURES

Fig. 1-12 show a system (1) for recycling polylactic acid in polylactic acid waste into pure lactide, according to embodiments of the present invention.
Fig. 1 shows a general view of a system (1) for recycling polylactic acid in polylactic acid waste into pure lactide, according to embodiments of the present invention.
Fig. 2 shows an assembly of synchronized extruders (2) in the system (1) of Fig. 1, according to embodiments of the present invention.
Fig. 3 shows a recovery unit (3) in the system (1) of Fig. 1, according to embodiments of the present invention.
Fig. 4 shows a pre-conditioning single-screw extruder unit (4) in the system (1) of Fig. 1, according to embodiments of the present invention.
Fig. 5 shows two twin-screw extruders (8, 9) arranged in a loop circuit in the system (1) of Fig. 1, according to embodiments of the present invention.
Fig. 6 shows an assembly of vapor collectors (17) in the system (1) of Fig. 1, according to embodiments of the present invention.
Fig. 7 shows a vacuum pump (20) in the system (1) of Fig. 1, according to embodiments of the present invention.
Fig. 8 shows two alternating lactide traps (23) in the system (1) of Fig. 1, according to embodiments of the present invention.
Fig. 9 shows a cross section of a lactide trap (23) in the system (1) of Fig. 1, according to embodiments of the present invention.
Fig. 10 shows a detailed view of the upper part of a lactide trap (23) in the system (1) of Fig. 1, according to embodiments of the present invention.
Fig. 11 shows a detailed view on a plurality of propeller blades (27) and a plurality of scraper blades (28) in the system (1) of Fig. 1, according to embodiments of the present invention.
Fig. 12 a, b) shows a detailed view of the lower part of a lactide trap (23) in the system (1) of Fig. 1, according to embodiments of the present invention.

### DETAILED DESCRIPTION OF THE INVENTION

The present invention concerns a system to produce lactide of high purity and with a desired stereochemistry from a polylactic acid based waste stream obtained from various resources.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a contaminant" refers to one or more than one contaminant.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight" (weight percent), here and throughout the description unless otherwise defined, refers to the relative weight of the respective component based on the overall weight of the formulation.

With the term "polylactic acid based waste stream" as used herein, the complete flow of polylactic acid containing waste from domestic or industrial areas such as homes, businesses, institutions and manufacturing plants, is meant. This includes all post-consumer polylactic acid based products such as used packaging materials, cups, cards, bottles, containers, toys, furniture, bags, medical devices, etc., or any polylactic acid based industrial waste such as polylactic acid containing leftovers or waste formed during the production of polylactic acid or obtained during cleaning of the industrial installations used for polylactic acid production.

The term "polylactic acid" or "PLA" referred to in the present invention is a polymer having a lactic acid ester structure as a principle unit. Preferably, it is a polymer having an L- and/or D-lactic acid ester structural unit, more preferably, it is a polymer having an L- and/or D-lactic acid ester structural unit at 90% or greater of the entire units. As a component other than the lactic acid ester structural unit, a copolymer component unit derived from a lactone, a cyclic ether, a cyclic amide, a cyclic acid anhydride, etc., which are copolymerizable with lactide, may also be present. Examples of copolymer components that can be suitably used include lactones such as caprolactone, valerolactone, -butyrolactone, and p-dioxanone; cyclic ethers such as ethylene oxide, propylene oxide, butylene oxide, styrene oxide, phenylglycidyl ether, oxetane, and tetrahydrofuran; cyclic amides such as -caprolactam; and cyclic acid anhydrides such as succinic anhydride and adipic anhydride. Furthermore, it is possible to use an alcohol, a glycol, a glycerol, another polyhydric alcohol, a carboxylic acid, a polybasic carboxylic acid, a phenol, etc. as a unit that can be present in the polylactic acid as an initiator component. Specific examples of the initiator component suitably used include ethylhexyl alcohol, ethylene glycol, propylene glycol, butanediol, polyethylene glycol, polypropylene glycol, polyvinyl alcohol, glycerol, octylic acid, lactic acid, and glycolic acid. The polylactic acid according to the current invention has a molecular weight higher than 5000 g/mol.

With the term "pure lactide stream" as used herein, a lactide stream is meant containing at least 99 % by weight of lactide.

"Lactide" as used herein, refers to a cyclic di-ester of lactic acid. As lactic acid exists in two forms which are optical enantiomers, designated as D-lactic acid and L-lactic acid, lactide may have one of three types of optical activity depending on whether it consists of two L-lactic acid molecules, two D-lactic acid molecules or an L-lactic acid molecule and a D-lactic acid molecule combined to form the dimer. These three dimers are designated L-lactide, D-lactide and meso-lactide, respectively. The lactide according to the current invention may comprise L-lactide, D-lactide and/or meso-lactide, in any type of combination. A 50/50 mixture of L-lactide and D-lactide is often referred to as D,L-lactide.

With the term "extrusion" as used herein, a process is meant in which a waste stream is passed through an extruder, whereby the waste stream is heated to a substantially molten state by a combination of heating elements and shear heating from the screw (or screws) of the extruder. Either a single- or a double-screw extruder may be used for the extrusion. Preferably, a twin-screw extruder is used.

The present invention provides a system to produce a pure lactide monomer stream from polylactic acid in polylactic acid based waste stream by recycling the waste to produce the lactide. The waste stream may comprise between 60-99.99% by weight of polylactic acid, the remainder of said waste stream comprising impurities. The recycling process is done by thermal reactive extrusion using a catalyst to induce the de-polymerization of PLA and the cyclization of lactic acid to lactide dimers. That is, lactide formation using units at the end of the chain by inducing the cyclization of the lactide dimers. The presence of catalyst at controlled temperature and pressure initiates the destruction of the PLA chains by a mechanism called back-biting, and allows the cyclization of lactide. The impurities of said polylactic acid based waste stream may comprise mineral charges, pigments, plasticizers, impact modifiers, metals, titanium oxide, paper, cellulosic materials, adhesives, polymers, or combinations thereof.

In a preferred embodiment, the system comprises two main parts: an assembly of synchronized extruders and a recovery unit. The assembly of synchronized extruders comprises at least one extruder. The at least one extruder is configured as a virtually infinite extruder. The recovery unit comprises an assembly of vapor collectors and a plurality of traps. The assembly of vapor collectors comprises at least one vapor collector.

In a preferred embodiment, the assembly of synchronized extruders may further comprise a pre-conditioning extruder unit, preceding the at least one extruder. The pre-conditioning extruder unit provides an optimal preparation of the waste material and therefore a higher lactide conversion rate.

In a preferred embodiment, the pre-conditioning extruder unit is preferably a single-screw extruder. The extruder in the unit may be a high torque extruder. The extruder in the unit preferably has a length/diameter (L/D) ratio of at least 40.

In a preferred embodiment, the polylactic acid waste may be injected into the pre-conditioning extruder unit through an infeed hopper, exerting a mechanical downward force by means of an open-structure propellers. The waste is then heated to temperatures between 90.0°C and 300.0°C. For example, the polylactic acid may be melted at or above the melting temperature thereof. A degassing system may be connected to the preferably single-screw extruder in said unit through multiple extraction points installed along said extruder's length. The degassing system is adapted to vacuum extract moisture and volatile organic compounds. The extraction points have valves that may open or close, to start or to stop said vacuum extraction. A vacuum e.g. no higher than 100 mb is applied on the extruder in the unit, which decreases the saturation temperatures of all moisture and volatile organic compounds. The moisture and the volatile organic compounds may have a negative effect on a subsequent catalytic extrusion and its catalyst.

In a preferred embodiment, the system may further comprise a preliminary unit, preceding the assembly of synchronized extruders. The preliminary unit prepares the polylactic acid waste for recycling. The preliminary unit may comprise a grinding unit, a washing unit, and a drying unit. The grinding unit is adapted to grind the polylactic acid waste particles to obtain particles with a particle size between for example 3 mm and 15 mm, e.g. to increase the melt kinetics while melting the waste in the pre-conditioning extruder unit. The washing unit washes the polylactic acid waste with water, for example on a conventional plastic-recycling washing line. The washing unit may be adapted to remove contamination such as for example mineral charges, dyes, metals, additives, organic waste. Removing said contamination may reduce residence times, and save energy and consumables. The drying unit dries the polylactic acid waste, since water could have a negative impact on the recycling yield. The drying unit is adapted to remove most of the water.

In a preferred embodiment, the at least one extruder may be arranged in a loop or a plurality of loops, such as for example in a shape of a circular loop, or eight-shaped loop, or any similar and/or suitable configuration for obtaining a virtually infinite extruder, wherein the waste is circulated. Such an arrangement virtually increases the length/diameter (L/D) ratio, for which high process efficiency and high depolymerization rates are obtained. This also results in a much more compact system e.g. much smaller extruder with a high L/D ratio. The number of loops in said virtually infinite extruder is represented by a factor (n). The L/D ratio is increased by increasing the factor (n). Some or all of the L/D ratio and the factor (n) are adapted depending on the material properties of the waste.

In a preferred embodiment, the waste may be injected through a feed control valve into the virtually infinite extruder wherein a catalytic extrusion takes place. The virtually infinite extruder is preferably configured in a construction of two extruders connected to one another so as to form a loop circuit e.g. two twin-screw extruders. The connection of said two twin-screw extruders may be by means of e.g. heated pipes. The temperature of the two twin-screw extruders is preferably between 160.0°C and 300.0°C, under a pressure preferably between e.g. 10 mb and 0.1 mb at different parts of said two twin-screw extruders. Said two twin-screw extruders may each have a separate electrical motor and gearbox. The waste is circulated in a looping process through the loop circuit.

In a preferred embodiment, the waste material is looped in the loop circuit until the depolymerization rate is satisfactory. The looping speed may be adaptable. If a contaminant is affecting the catalyst's efficiency, additional volumes of catalyst may be injected in the loop. The waste material is kept in movement by melt pressure generated by the geometrical shape of the twin-screw extruders.

In a preferred embodiment, at least one extruder in the two twin-screw extruders is fitted with a catalyst injection pump e.g. on top thereof, to inject a catalyst. The catalyst may be a metal catalyst, such as for example Tin 2-ethylhexanoate Sn(Oct)₂. The catalyst is injected in at least one injection point.

In a preferred embodiment, some, or all of kneading blocks, mixing elements, and regular conveying elements may further be fitted on at least one extruder in the two twin-screw extruders, at various vacuum points, at least one vacuum point. The blocks and the mixing elements ensure a proper distribution of the catalyst, while the conveying elements allow low melt pressure and enhance the lactide vapor extraction.

In a preferred embodiment, at least one of the two twin-screw extruders may comprise a three-way valve. The three-way valve may have three ports, two of which are connected to the at least one of the two twin-screw extruders, and one port is connected to a post-recycling discharge point. During the recycling process, e.g. during the looping process, the port connected to the post-recycling discharge point is closed. On the other hand, once the recycling process is done, the post-recycling discharge point is open, and post-recycling residue is mechanically discharged e.g. per gravity. When the three-way valve opens e.g. the third port, for discharging post-recycling residues, the feed control valve opens simultaneously together with the injection pump of the catalyst, so as to flush the residues out with new waste material and catalyst dose through the two twin-screw extruders. The three-way valve is adapted to either loop the waste (e.g. the looping process is in progress), or to discharge the post-recycling residue (e.g. the looping process is completed).

In a preferred embodiment, in the two twin-screw extruders, with the presence of the catalyst, and with the high temperatures, and high vacuum, lactide vapor is obtained from the polylactic acid waste.

In a preferred embodiment, the assembly of vapor collectors may be a spider-shaped collector, and may be installed on top of said two twin-screw extruders in the assembly of synchronized extruders. The lactide vapor may be vacuum extracted by the assembly of vapor collectors through at least one vacuum point e.g. various vacuum points on said extruders. The assembly of vapor collectors carries the lactide vapor to the plurality of traps with optimal efficiency, through heated and thermally insulated pipes. The pipes may be heated by means of e.g. electrical resistances, to obtain temperatures ranging between e.g. 90.0°C and 180.0°C.

In a preferred embodiment, the traps are adapted to receive the vapor. The vapor is solidified or condensed in the inner walls of said traps. Lactide crystals are formed in said inner walls, and eventually collected. The traps may be identical traps. The traps are adapted such that lactide crystals are formed in some traps, while lactide crystals are collected in some other traps, and continuously alternating between the function of each trap e.g. the traps in which the crystals were collected are adapted such that the crystals are formed in, and the traps in which the crystals have formed in are adapted such that the crystals are collected from. For example, the traps are asynchronous. For example, the traps are adapted so as to obtain a continuous process. Any number of alternating traps may be used.

In a preferred embodiment, the plurality of traps may be a plurality of cylinders. Said cylinders preferably have L/D ratios e.g. no lower than 40. The cylinders may be equipped with doubles walls. A cooling liquid may circulate inside said doubles walls to cool or refrigerate the inner walls of the traps to temperatures e.g. -10.0°C and 50.0°C, which facilitates the condensation or solidification of lactide crystals. Another cooling mechanism for said walls may be used.

In a preferred embodiment, each trap is connected to a high vacuum pump e.g. < 10 mb, through a diverter valve. The valve may be located at the bottom of the trap. Similarly, each trap is connected to the assembly of vapor collectors through one another diverter valve. Since the trap is connected to the assembly of vapor collectors, and the assembly of vapor collectors is connected to the two twin-screw extruders, the high vacuum pump may also be applied on the two twin-screw extruders. High vacuum is preferably applied at all times on the twin-screw extruders to ensure a continuous process.

In a preferred embodiment, in a lactide recovery cycle, at least one trap has its valves open, wherein the lactide vapor enters the trap through an inlet e.g. at the top of the trap. After the lactide crystals are formed, the valves of the trap are closed, and the trap is brought to ambient pressure e.g. atmospheric pressure, in dry condition, and the lactide crystals are collected e.g. scrapped off the inner walls of the trap. Meanwhile, at least one another trap has its diverter valves open, wherein the vapor is directed to the at least one another trap. At any point in time, the lactide crystals are formed in at least one trap, while the crystals are collected in at least one another trap. Only one process runs in a trap at a time, i.e. if the crystals are condensing in a trap, the crystals cannot be collected at the same time in the same trap, and similarly if the crystals are being collected off a trap, the vapor is not injected in the same trap. For example, the two traps are asynchronous.

In a preferred embodiment, the continuous alteration process enhances the de-polymerization rates and the process efficiency. Considering the variability induced by the waste's nature, the depolymerization rate is extrapolated from sensors readings (mass balance and/or spectroscopy analyses) that will ultimately determine the optimal residence time. A high rate of de-polymerization in a short time is obtained, for example between 10 min and 20 min.

In a preferred embodiment, the traps may comprise a plurality of propeller blades. The propeller blades, e.g. which axis coincide with that of the trap, are actuated to rotate and create a turbulent flow and centrifugal forces to maximize contacts between the lactide vapor and the inner walls of the trap e.g. cylinder. For example, the propeller blades project the lactide vapor on the inner walls of said traps tangentially to speed up the condensation of the lactide crystals.

In a preferred embodiment, the traps may comprise a plurality of scraper blades. The scraper blades are actuated to rotate and scrap the lactide crystals. The trap may be brought to ambient pressure by injection of an inert gas e.g. Nitrogen. After bringing the trap to ambient pressure, the scraper scraps the lactide crystals off the inner walls of the traps.

In a preferred embodiment, the scraper blades and the propeller blades are connected to an electrical motor and a bi-directional gear. During forming lactide crystals, the scraper blades remain motionless, held in place by the bi-directional gearing. Similarly, during scraping of lactide crystals, the propeller blades remain motionless, held in place by the bi-directional gearing.

In a preferred embodiment, the plurality of traps may be vertical. For example, the lactide vapor may be injected at the top of said traps. A discharge diverter valve e.g. butterfly valve may be present at the lower part of the trap. After opening said discharge diverter valve, the crystals are scrapped and may fall into a discharge container. The container may be a hermetic bag placed below the vertical traps for the scrapped lactide crystals to fall into. The crystals may be recovered in an adapted packaging under controlled atmosphere.

In a preferred embodiment, the system communicates with weight scales, on which the lactide crystals are being recovered. Through a mass balance calculation e.g. input polylactic acid quantities versus recovered lactide crystals.

In a preferred embodiment, some, or all of the feed control valve, the assembly of synchronized extruders, the catalyst injection pump, the three-way valve, and the traps, may be controlled and synchronized by a programmable logic controller (PLC). The PLC ensures a constant loading of the extruders e.g. the pre-conditioning extruder unit and the two twin-screw extruders, by adapting and synchronizing e.g. input quantity, screw speed, and flow speed. This facilitates a continuous process and synchronizes the speeds of the extruders to harmonize the waste flow throughout the system. The number of loops for which the waste is circulated in the virtually infinite extruder is controlled by the PLC. The number of loops is controlled by the PLC by a periodic control of mass balance or continuous in-melt measurements. The PLC may adjust the required catalyst dosages. The PLC may cause the feed control valve to open simultaneously together with the injection pump of the catalyst whenever the three-way valve opens for discharging post-recycle residues.

In a preferred embodiment, when discharge is needed, the feed control valve opens simultaneously with the discharge valve. The PLC injects a catalyst when a new waste material is injected into the synchronized extruders. Said new waste material creates a pressure to allow the screws to discharge post-recycling residues. As soon as the new waste material is in close proximity to the discharge valve, the valves close again, and the material is looped into the loop circuit.

In a preferred embodiment, the traps e.g. the upper part of the trap, comprises a port for temperature sensor and/or a port for pressure sensor, for monitoring the temperature and pressure therein.

In a preferred embodiment, the system may further comprise an analysis unit, wherein the collected lactide crystals are analyzed by high-performance liquid chromatography using a chiral column to determine the different ratios of D-LA, L-LA, meso-LA, and possible presence of lactic acid.

In a preferred embodiment, the system comprises polylactic acid partially or fully in the assembly of synchronized extruders, and/or comprises lactide partially or fully in the recovery unit.

Further characteristics and advantages of embodiments of the present invention will be described with reference to the figures. It should be noted that the invention is not restricted to the specific embodiments shown in these figures or described in the examples, but is only limited by the claims.

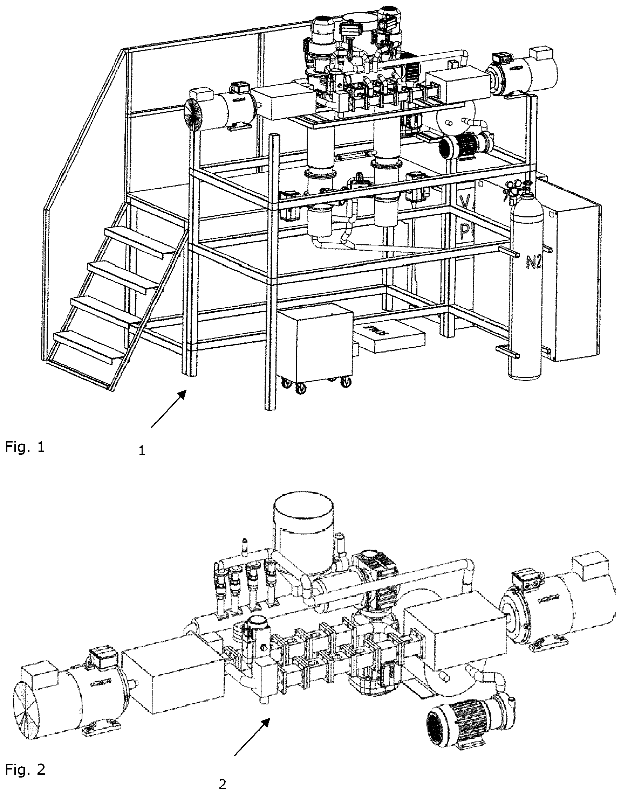

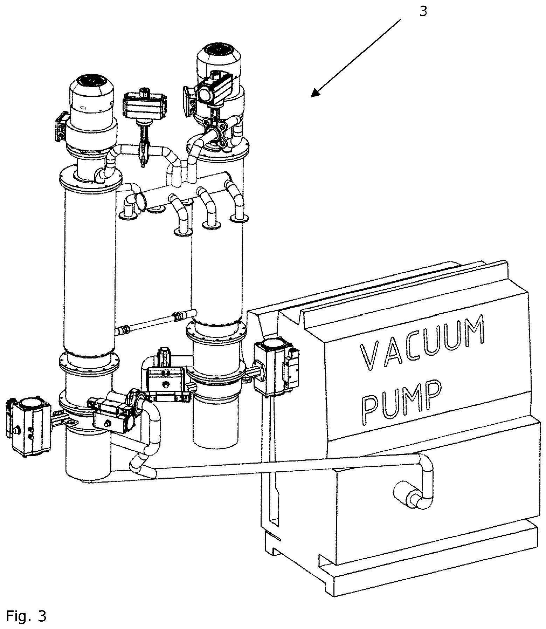

Fig. 1 shows a general view of a system (1) for recycling polylactic acid in polylactic acid waste into pure lactide, according to embodiments of the present invention. The system (1) comprises an assembly of synchronized extruders (2) shown in Fig. 2 and a recovery unit (3) shown in Fig. 3.

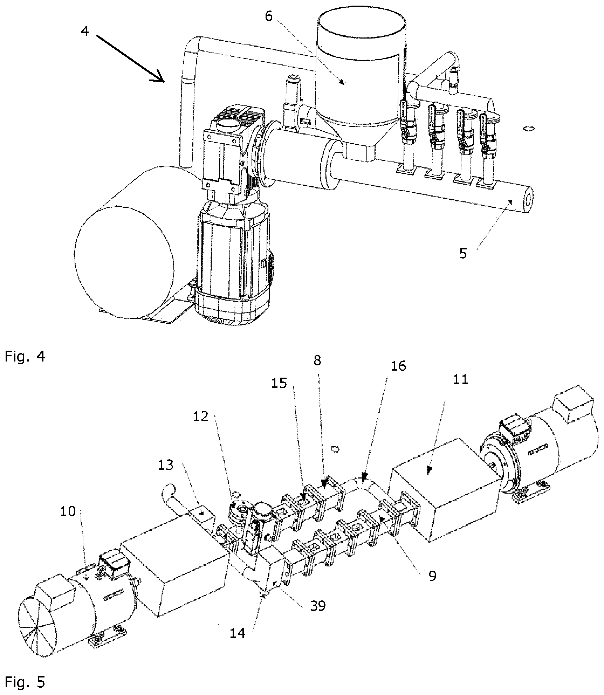

The assembly of synchronized extruders (2) comprises a pre-conditioning extruder unit (4) shown in Fig. 4. Said unit comprises a single-screw extruder (5). The single-screw extruder (5) is fed by an infeed hopper (6). Degassing pipes (7) comprising valves are attached to the single-screw extruder (5). The waste is melted in the single-screw extruder (5) and the water and the volatile organic compounds are removed using the degassing pipes (7).

The assembly of synchronized extruders (2) further comprises two twin-screw extruders (8, 9), connected to one another in a loop circuit using heated pipes (16), as shown in Fig. 5. Each of said two twin-screw extruders (8, 9) is connected to an electric motor (10) and a gearbox (11). A catalyst injection point (12) is connected to one of the two twin-screw extruder (8). A three-way valve (39) is connected to one of the two twin-screw extruders (9), and to the post-recycling discharge point (14). The two twin-screw extruders (8, 9) are connected to an assembly of vapor collectors (17) through vacuum extraction points (15). A feed control valve (13) controls the waste infeed to the two twin-screw extruders (8, 9). The waste is circulated or looped in the two twin-screw extruders (8, 9), until the depolymerization rate is satisfactory.

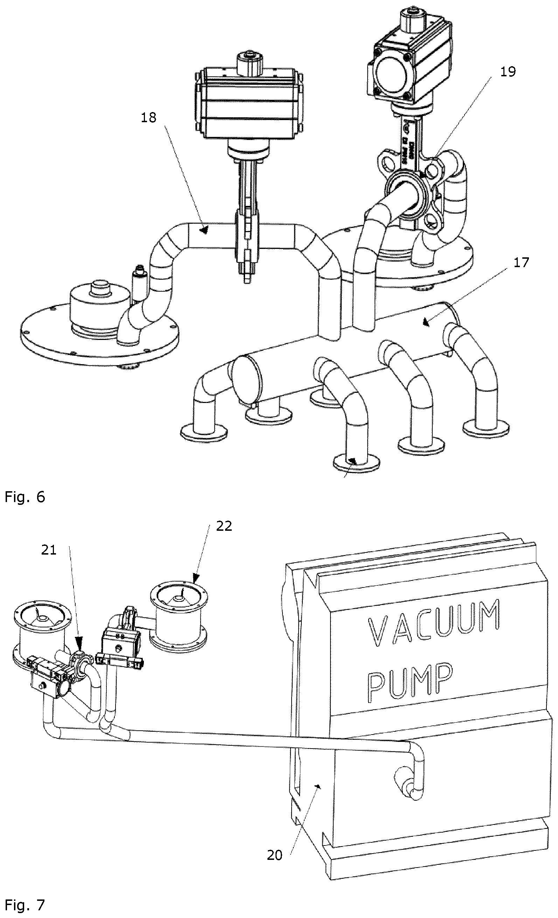

The recovery unit (3) comprises an assembly of vapor collectors (17) in Fig. 6. The assembly of vapor collectors (17) is connected to the plurality of traps (23) through heated pipes (18) and two diverter valves (19).

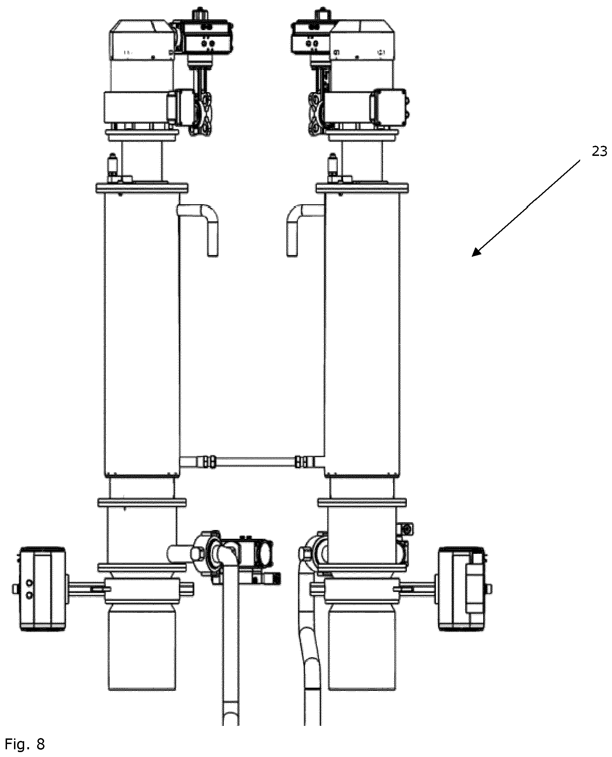

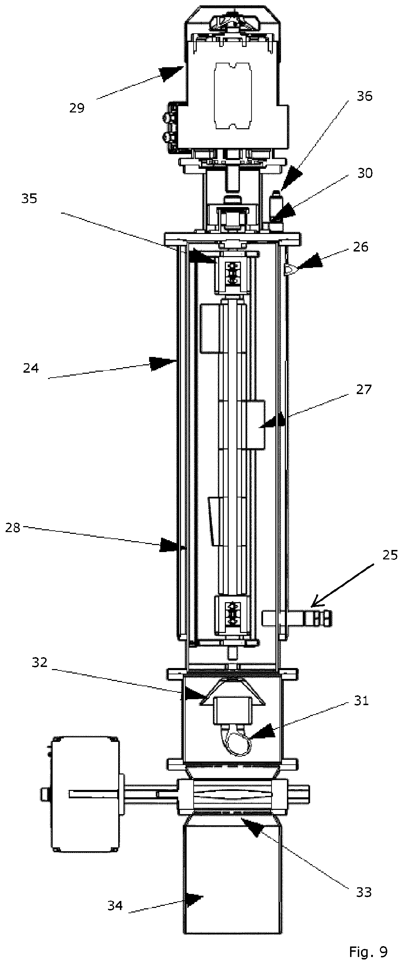

The plurality of traps (23) are identical, as shown in Fig. 8. A cross section of one trap (23) is shown in Fig. 9. The traps (23) in this example are cylindrical. The trap (23) has double walls (24), wherein a cooling fluid is injected at an entry point (25) and is extracted at an exit point (26) to circulate so as to cool down the trap (23). The lactide vapor is injected at an injection point (30) from the assembly of vapor collectors (17).

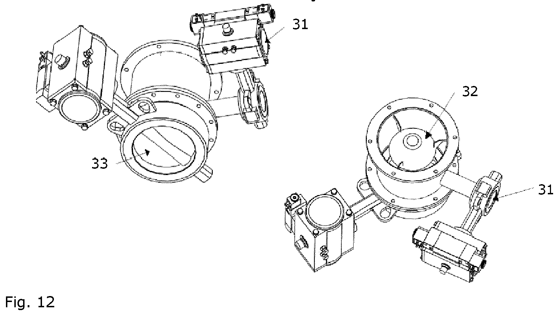

Each trap (23) is connected to the vacuum pump (20) shown in Fig. 7 through a vacuum connection (31), controlled by a diverter valve (21) on said trap (23) comprising a vacuum protective cover (32), as shown in Fig. 12. The vacuum pump (20) is connected to the assembly of collectors (17), through the traps (23), and is also connected to the two twin-screw extruders (8, 9) through the traps (23) and the assembly of collectors (17). Vacuum is applied on the two twin-screw extruders (8, 9) at all times to ensure a continuous process. If the lactide crystals are being collected off a trap in the plurality of traps (23), the vacuum pump (20) is not connected to said trap. However, the vacuum pump would still be connected to the two twin-screw extruders (8, 9) through another trap in the plurality of traps (23).

Each trap (23) is connected to a discharge container (34) through a discharge diverter valve (33) e.g. butterfly valve, and a connecting cylinder (22), for discharging the lactide crystals. The resulting lactide is then packaged.

Before collecting lactide off the inner walls of the traps (23), nitrogen is injected at an injection point (36) to bring the pressure in the trap (23) back to ambient pressure.

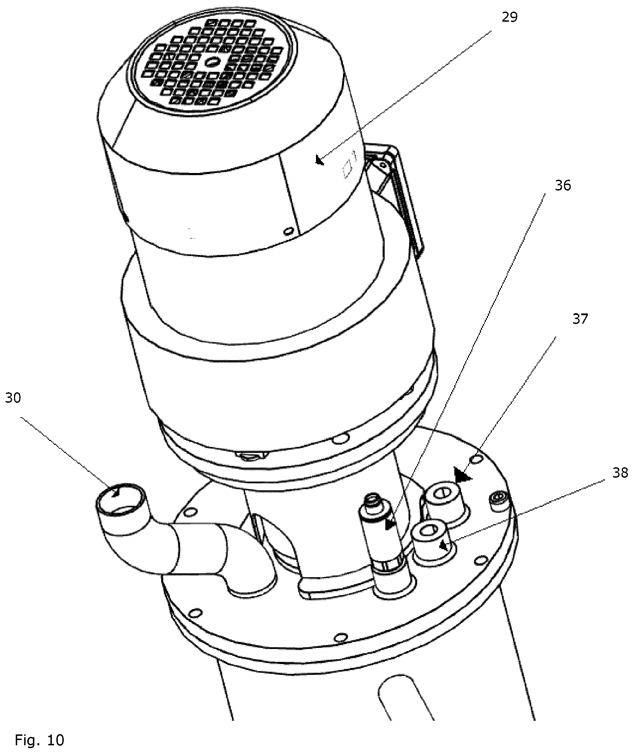

Fig. 10 shows a detailed view for the upper part of the trap (23). The trap comprises a port for temperature sensor (37) and a port for pressure sensor (38) for monitoring the temperature and pressure therein.

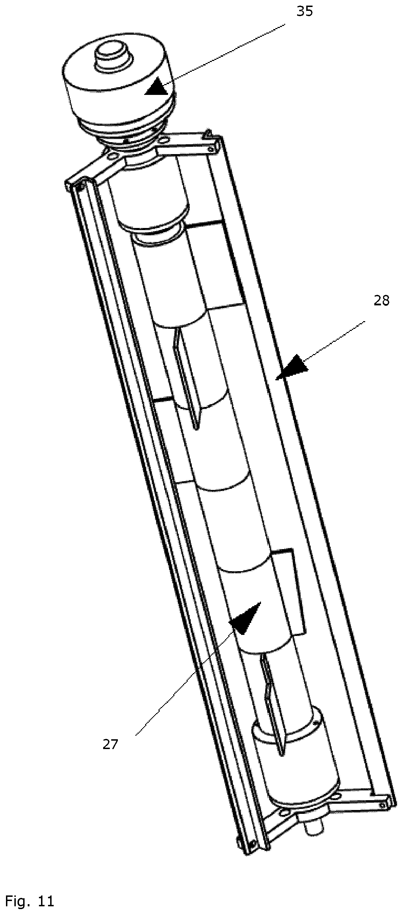

The trap (23) comprises a plurality of propeller blades (27) and a plurality of scraper blades (28), as shown in a detailed view in Fig. 11. The propeller blades (27) create a turbulent flow and centrifugal forces to maximize contacts between the lactide vapor e.g. hot vapor, and the inner walls e.g. cold walls, of the trap (23). The scraper blades (28) scrap the lactide crystal solidified on the inner walls of said trap (23). Both the propeller blades (27) and the scraper blades (28) are connected to an electrical motor (29) and held by bi-directional gearing (35). Only one of the propeller (27) or the scraper (28) works at one point in time e.g. the propeller works only during solidifying the vapor into crystals at the inner walls of the traps (23), while the scraper is held by the bi-directional gearing, and the scraper (28) works only during scrapping to remove the lactide crystals from the inner walls of the traps (23) while the propeller is held by the bi-directional gearing.

Fig. 12 shows a detailed view for the lower part of the trap (23), comprising a vacuum connection (31) with a vacuum protective cover (32) connected to the vacuum pump (20).

The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

## Claims

1. System (1) for recycling of polylactic acid in polylactic acid waste to obtain pure lactide, the system (1) comprising an assembly of synchronized extruders (2) and a recovery unit (3),
wherein the assembly (2) comprises at least one extruder, and wherein the unit (3) comprises an assembly of vapor collectors (17) and a plurality of traps (23), wherein the assembly of vapor collectors (17) comprises at least one vapor collector,
**characterized in that** the at least one extruder is configured as a virtually infinite extruder, and that the traps (23) are adapted such lactide crystals are formed in some traps (23), while the lactide crystals are collected in some other traps (23), and continuously functionally alternating between said traps (23).

2. System (1) according to claim 1, wherein the at least one extruder is arranged in a loop wherein the waste is circulated, such as for example in a shape of a circular loop, or a plurality of loops, or eight-shaped.

3. System (1) according to any of the previous claims, wherein the at least one extruder is two extruders arranged in a loop wherein the waste is circulated.

4. System (1) according any of the previous claims, wherein at least some traps (23) are asynchronous with at least some other traps (23).

5. System (1) according to any of the previous claims, wherein the assembly of synchronized extruders (2) further comprises a pre-conditioning extruder unit (4) preceding the at least one extruder.

6. System (1) according to any of the previous claims, wherein the system (1) further comprises a preliminary unit, said unit comprises a grinding unit, a washing unit, and a drying unit.

7. System (1) according to any of the previous claims, wherein the assembly of vapor collectors (17) is connected to the at least one extruder through at least one vacuum point, and wherein the assembly of vapor collectors (17) carries lactide vapor to the plurality of traps (23) through diverter valves (19).

8. System (1) according to any of the previous claims, wherein the plurality of traps (23) are a plurality of cylinders and/or the plurality of traps (23) are vertical.

9. System (1) according to any of the previous claims, wherein the plurality of traps (23) are connected to a discharge container (34) through discharge diverter valves (33).

10. System (1) according to any of the previous claims, wherein the plurality of traps (23) is equipped with a plurality of propeller blades (27), wherein said propeller blades (27) are adapted to create a flow that maximizes the contact between the inner walls of said traps (23) and the lactide vapor.

11. System (1) according to any of the previous claims, wherein the plurality of traps (23) are equipped with a plurality of scraper blades, wherein said scraper blades are adapted to scrap the lactide crystal solidified on the inner walls of said traps (23).

12. System (1) according to any of the previous claims, wherein the system (1) further comprises a programmable logic controller (PLC), capable of controlling and/or synchronizing some or all of: the traps (23), the catalyst injection point (12), the assembly of synchronized extruders (2), the three-way valve (39), and the feed control valve (13).

13. System (1) according to any of the previous claims, wherein the system (1) comprises polylactic acid partially or fully in the assembly of synchronized extruders (2), and/or comprises lactide partially or fully in the recovery unit (3).

14. A plurality of traps (23) for producing lactide crystals from lactide vapor, wherein the traps (23) are adapted such that lactide crystals are formed in some traps (23), while the lactide crystals are collected in some other traps (23), and continuously functionally alternating between said traps (23).

15. Use of a system (1) according to claims 1 to 13 to produce lactide from polylactic acid waste or use of a plurality of traps (23) according to claim 14 to produce lactide crystals from lactide vapor.
